Europäisches Patentamt

European Patent Office

Office européen des brevets

(11) Veröffentlichungsnummer: **0 302 565 B1**

(12) # EUROPÄISCHE PATENTSCHRIFT

(45) Veröffentlichungstag der Patentschrift: **25.03.92**

(51) Int. Cl.⁵: **B24B 49/18**, B24B 33/08, B24D 7/00, B23Q 17/09, B07C 5/342

(21) Anmeldenummer: **88201645.4**

(22) Anmeldetag: **27.07.88**

Verbunden mit 88905842.6/0364482 (europäische Anmeldenummer/Veröffentlichungsnummer) durch Entscheidung vom 08.03.91.

(54) **Werkzeug zur spanabhebenden Bearbeitung.**

(30) Priorität: **03.08.87 DE 3725652**

(43) Veröffentlichungstag der Anmeldung:
**08.02.89 Patentblatt 89/06**

(45) Bekanntmachung des Hinweises auf die Patenterteilung:
**25.03.92 Patentblatt 92/13**

(84) Benannte Vertragsstaaten:
**DE ES GB GR**

(56) Entgegenhaltungen:
| | |
|---|---|
| EP-A- 0 032 774 | EP-A- 0 122 741 |
| EP-A- 0 155 813 | EP-A- 0 174 722 |
| EP-A- 0 184 600 | EP-A- 0 225 300 |
| DD-A- 222 414 | DE-A- 3 404 257 |
| DE-A- 3 535 473 | FR-A- 1 499 271 |
| GB-A- 1 381 763 | US-A- 3 801 349 |
| US-A- 3 999 062 | US-A- 4 031 368 |
| US-A- 4 420 253 | |

PATENT ABSTRACTS OF JAPAN, Band 6, Nr. 124 (M-141)[1002], 9. Juli 1982, Seite 3 M 141; & JP-A-57 48 476 (IZUMI JIDOUSHIYA KOGYO K.K.) 19-03-1982

V.D.I. ZEITSCHRIFT, Band 116, Nr. 17, Dezember 1974; K. ESSEL et al. "Sensor zum Erfassen des Freiflächenverschleisses an Drehwerkzeugen", & KONSTRUKTION UND FERTIGUNG

(73) Patentinhaber: **KADIA-Diamant Maschinen- und Werkzeugfabrik O. Kopp GmbH & Co. Fabrikstrasse 2 W-7440 Nürtingen - Zizishausen(DE)**

(72) Erfinder: **Flores, Gerhard, Ing.(grad) Gartenstrasse 39 W-7302 Ostfildern 3(DE)**
Erfinder: **Reisser, Helmut, Dipl.-Ing. Lausitzer Strasse 8 W-8192 Geretsried 2(DE)**
Erfinder: **Lex, Konrad, Dipl.-Ing.(FH) Lausitzer Strasse 2 W-8192 Geretsried 2(DE)**

(74) Vertreter: **Dreiss, Hosenthien & Fuhlendorf Gerokstrasse 6 W-7000 Stuttgart 1(DE)**

**Beschreibung**

Die Erfindung betrifft ein Honwerkzeug oder eine Schleifscheibe, gebildet durch einen Schneidkörper und einen den Schneidkörper tragenden Schneidkörperträger und eine Meßeinrichtung zur Messung des Verschleißes derartiger Werkzeuge.

Derartige Werkzeuge sind bekannt. Es handelt sich dabei um Werkzeuge zur spanabhebenden Bearbeitung, bei denen ein Schneidbelag (=Schneidkörper) mittels einer Haftschicht auf einer Stahlsohle (=Schneidkörperträger) angeordnet ist.

Im Zuge der Einrichtung vollautomatischer Bearbeitungsabläufe, meist bei mehrspindligen Maschinen, ist die Verschleißüberwachung für die Betriebssicherheit und die Fertigungsqualität von großer Bedeutung. Der Verschleiß einer Honleiste ist weitgehend abhängig von der Zahl der bearbeiteten Werkstücke (Standmenge). Andere Einflüsse sind z.B. der Vorschub, die Werkstoffhärte oder Inhomogenitäten des Werkzeuges. Für die wirtschaftliche Fertigung ist der Werkzeugwechsel zur rechten Zeit sehr wichtig. Er darf weder zu früh erfolgen, d.h., wenn das Schneidmittelvolumen (Volumen des Schneidkörpers oder Schneidbelags) noch nicht vollständig ausgenutzt ist; er darf auch nicht zu spät erfolgen, denn dies würde eine Produktion mit nicht mehr qualitativ vollwertigen Werkzeugen bedeuten und somit zu Ausschuß führen.

Bisher konnte man die Überwachung des Verschleißes des Schneidkörpers einer Honleiste oder einer Schleifscheibe z.B. angenähert dadurch lösen, daß - im einfachsten Fall - für die jeweilige Bearbeitungsoperation die kleinste Standmenge (Zahl der bearbeiteten Werkstücke) ermittelt und dieser Wert als Richtwert einer in entsprechenden Abständen erfolgenden Überprüfung der Werkzeugmaschine durch das Bedienungspersonal zugrunde gelegt wurde. Die Überprüfung selbst erfolgte durch Betrachtung des Werkzeuges.

Eine andere Möglichkeit besteht in der Überwachung des Zustellweges bei elektronisch-mechanischer oder elektronisch-hydraulischer Zustellung der Werkzeuge. Dies bedeutet jedoch nur eine indirekte Kontrolle des Verschleißes des Schneidbelages einer Honleiste. Erfolgt die Zustellung in Schritten durch eine bestimmte Zahl von Impulsen, so kann man - entsprechend der vermuteten Abnutzung - nach einer voreinstellbaren Anzahl von Bearbeitungszyklen eine ebenfalls fest voreinstellbare Anzahl zusätzlicher Zustellimpulse vorsehen. Auch eine solche Einrichtung stellt jedoch keine tatsächliche Verschleißüberwachung, sondern ausschließlich eine Verschleißkompensation. Erst die Summe der zur Kompensation erforderlichen zusätzlichen Impulse und der Vergleich mit einer empirisch vorgegebenen nutzbaren Höhe des Schneidbelags einer Honleiste ergibt jedoch die von einer Maschinensteuerung verwertbare Information, ob ein Auswechseln einer Honleiste erforderlich ist. Bei modernen Maschinensteuerungen werden die nutzbare Höhe des Schneidbelages, die Anzahl der Schritte je Kompensationsvorgang, und der Konuswinkel eines Honwerkzeuges der Steuerung eingegeben. Durch Aufsummieren der Kompensationswege wird bei Erreichen der Verschleißgrenze die Maschine stillgesetzt. Über Balkendiagramme am Bildschirm wird der Verschleißzustand der Honleisten dargestellt. Bei einer programmierbaren Warngrenze fordert die Maschinensteuerung das Bedienerpersonal rechtzeitig zum Werkzeugwechsel auf. Diese Werkzeugverschleißüberwachung ist jedoch nur einsetzbar, bei einer mittels Schrittmotor betriebenen Zustellung. Bei einer hydraulischen Zustellung läßt sich diese indirekte. Verschleißüberwachung nicht anwenden. Diese indirekte Überwachung hat ferner den Nachteil, daß sie die Fertigungstoleranzen in der Höhe berücksichtigen muß. Eine solche Höhe entspricht aber unter Umständen einer Standmenge von bis zu mehreren tausend Werkstücken. Die indirekte Verschleißüberwachung gewährleistet daher nicht eine möglichst wirtschaftliche Ausnutzung des Schneidbelages.

Es sind keine Honleisten bekannt, bei denen der Verschleißzustand direkt erfaßt werden kann. Aus benachbarten Gebieten sind zwar Werkzeuge zur spanabhebenden Bearbeitung von Werkstücken bekannt, bei denen eine Verschleißüberwachung erfolgt. Die dabei verwandten Technologien können jedoch nicht unmittelbar dazu eingesetzt werden. eine Honleiste zu schaffen, bei der die Verschleißüberwachung direkt erfolgen kann.

In der EP-A-0 225 300 wird z.B. eine Wendeschneidplatte beschrieben, bei welcher auf einem Substrat, das Strahlung emittiert, eine strahlungsundurchlässige Schicht aufgebracht ist. Bei zunehmendem Verschleiß wird im Bereich der Freifläche das Strahlung emittierende Substrat zunehmend freigelegt. Die von dem Substrat emittierte Strahlung wird als Maß der Abnutzung festgestellt. Außerdem ist es aus dieser Druckschrift bekannt, kleinflächige Abnutzungen vom Typ Kraterverschleiß an der Schneide selbst festzustellen. Die direkte Verschleißüberwachung über den Freiflächenverschleiß ist bei Honleisten nicht anwendbar, da diese ja insgesamt mit dem Werkstück in großflächigem Kontakt stehen und keine Freiflächen aufweisen, an denen in dieser Weise der Verschleiß festgestellt werden könnte.

Ähnliches gilt für die DD-A-222 414. Daraus ist ein Verfahren zur Verschleißerkennung an einem Drehstahl bekannt, bei dem eine punktförmige, radioaktive Markierung auf der Freifläche und/oder der Spanfläche des Werkzeugs aufgebracht wird.

Bei Verschleiß wird die radioaktive Markierung mit abgetragen. Die dadurch bewirkte Änderung der Strahlung dient zur Messung des Verschleißes. Eine derartige Verschleißmessung ist außer wegen der nicht unkritischen Strahlenbelastung des Arbeitsplatzes bei Honleisten deshalb nicht anwendbar, weil eine flächige Überwachung des Schneidkörpers nicht möglich ist.

Aus der DE-Z Fertigungstechnik und Betrieb (1985) 9, Seite 523-526, insbesonders S. 524, ist es bekannt, die Freifläche einer Wendeschneidplatte mit einer radioaktiven Markierung zu überziehen. Die Verschleißerkennung erfolgt wiederum durch die Messung des Freiflächenverschleißes. Auch dieses Verfahren ist, neben dem Nachteil der Strahlenbelastung, bei Honleisten deshalb nicht anwendbar, weil diese keine Freiflächen haben. Dasselbe gilt für das alternativ in dieser Veröffentlichung genannte Meßprinzip der Anbringung von Leitbahnstrukturen an den Freiflächen, die bei Masseverbindung infolge Verschleiß ein Signal abgeben. Hon- oder Schleifwerkzeuge sind beides Werkzeuge mit unbestimmter Schneidengeometrie bei denen - im Gegensatz zu Wendeplatten, Bohrern oder Drehstählen - Freiflächen generell nicht existieren.

Aus der US-PS 4,420,253 ist ein Bohrer bekannt, in dessen Schaft eine Glasfaser eingelassen ist. Das eine Ende der Glasfaser wird von einer Lichtquelle bestrahlt. Das andere Ende erstreckt sich in den Schaft hinein und endet in einem bestimmten Abstand von der Schneide. Nach Abtrag dieses zwischen Faserende und Schneide liegenden Materials wird das Licht in einem unterhalb des Bohrers angeordneten Detektor registriert. Mit einem solchen Verfahren ist die Verschleißüberwachung einer Honleiste nicht möglich, da die gesamte Fläche des Schneidkörpers so nicht ohne extremen Aufwand überwacht werden könnte.

Aus der DE-OS 34 04 257 ist eine Meßeinrichtung zur Messung der Abnutzung eines Messers zum Schneiden von Halbleiterscheiben bekannt. Bei dieser wird der von einer Senderanordnung ausgehende und vom Messer reflektierte Lichtstrahl in einem Detektor registriert. Der Verschleiß des Messerkörpers bringt eine Änderung des Reflektionsverhaltens des Messers mit sich. Dadurch verändert sich auch die Intensität des reflektierten Lichtstrahl. Diese Meßeinrichtung hat den Nachteil, daß sie gegenüber Streulicht anderer Strahlungsquellen sehr empfindlich ist. Wie in dieser Durchschrift ausgeführt, funktioniert die Meßeinrichtung nicht, wenn das Messer durch Spül- und/oder Kühlmedien benetzt ist. Die Meßeinrichtung liefert ferner nur ein Signal, welches - bedingt durch die Rotation des Messers - einem über einen Teilbereich des Messers gemittelten Verschleiß entspricht.

Für Honwerkzeuge der Schleifscheiben wäre ein derartiges Verfahren. selbst wenn man die genannten Nachteile in Kauf nehmen wollte, schon vom Prinzip her nicht anwendbar, weil sich der Verschleiß dieser Werkzeuge in dem ansonsten relativ genau bestimmbaren Zeitpunkt, in dem sie ausgewechselt werden müssen, nicht eindeutig dem Reflektionsverhalten der Oberfläche des Schneidkörpers zuordnen läßt.

In der US-A-40 31 368 ist eine Meßeinrichtung an einer Werkzeugmaschine beschrieben, bei der ein Laserstrahl über das Werkzeug geführt wird. Die Reflektion des Laserstrahls wird in einer Empfängeranordnung registriert und an eine Auswerteeinrichtung weitergeleitet. Diese Auswerteeinrichtung berechnet aus den optischen Meßdaten in Verbindung mit anderen Parametern (z.B. Werkstückabmessungen, Vibrationen, Oberflächenrauhigkeit u.a.) den Verschleiß. Diese Meßvorrichtung setzt kostspielige und wartungsintensive Einrichtungen, so u.a. einen Laserresonator voraus, Die Anwendbarkeit auf die Feststellung des Verschleißes von Honleisten entfällt aus den bereits oben angegebenen Gründen.

Es ist Aufgabe der Erfindung, ein Honwerkzeug und eine Schleifscheibe der eingangs genannten Art derart weiterzubilden, daß es möglich wird, den Verschleißzustand des Schneidkörpers direkt zu erfassen, d.h. festzustellen, wann der Schneidkörper abgenutzt ist, so daß ein Auswechseln der Honleiste erforderlich ist. Als "Schneidkörper" wird dabei der durch Bindematerial mit Diamantkorn gebildete Schneidbelag einer Honleiste oder Schleifscheibe verstanden. Die Honleiste soll ferner derart ausgebildet sein, daß die Überwachung von Ungenauigkeiten des Schneidbelags unabhängig ist, d.h. es soll möglich sein, trotz derartiger Ungenauigkeiten in der Höhe des Schneidbelags genau den richtigen Zeitpunkt zum Werkzeugwechsel festzustellen. Die Verschleißmessung an der Honleiste mittels der beschriebenen Meßvorrichtung soll auch dann noch funktionieren, wenn die Honleiste durch Spüloder Kühlmedien (z.B. Honöl) benetzt ist. Ferner soll eine geeignete Meßeinrichtung zur Messung des Verschleißes eines derartigen Hon- oder Schleifwerkzeuges bereitgestellt werden, mit der der Verschleißzustand einfach und direkt erfaßt werden kann, d.h. festgestellt werden kann, wann der Schneidkörper abgenutzt und ein Auswechseln erforderlich ist.

Diese Aufgabe wird erfindungsgemäß durch ein Honwerkzeug oder eine Schleifscheibe der eingangs genannten Art gelöst, bei dem zwischen Schneidkörper und Schneidkörperträger eine elektromagnetische Strahlung bei einer spezifischen Wellenlänge selektiv absorbierende und/oder eine bei Anregung elektromagnetische Strahlung selektiv emittierende Substanz als Schicht, in eine Schicht aus anderem Material eingebettet, oder als Beschichtung eines als diskretes Element unter dem Schneidkörper angeordneten Indikatorträger angeordnet ist.

Eine Meßeinrichtung zur Messung des Verschleißes eines Hon-oder Schleifwerkzeuges der genannten Art ist dadurch gekennzeichnet, daß eine selektiv Lichtstrahlung abgebende Sendeanordnung auf den Schneidkörper ausgerichtet angeordnet ist, und daß ferner eine selektive Strahlung aufnehmende Empfängeranordnung derart auf das Honwerkzeug ausgerichtet angeordnet ist, daß sie die von der Sendeanordnung auf das Werkzeug abgestrahlte und vom Werkzeug reflektierte Strahlung aufnimmt und aus dieser ein Anzeigesignal ableitet.

Vorteilhafte Weiterbildungen der Erfindungen sind in den Unteransprüchen definiert.

Die Aufgabe wird erfindungsgemäß durch die im Kennzeichen des Patentanspruches 1 angegebenen Merkmale gelöst.

Sobald der "Schneidkörper", d.h. der Schneidbelag der Honleiste abgenutzt ist, tritt die darunter angeordnete, eine Anregungsstrahlung selektiv absorbierende oder bei Anregung selektiv emittierende Substanz zutage. Dies kann ohne komplizierte Auswertung der Strahlung erfaßt und somit dem Ausmaß des Verschleißes, der einen Werkzeugwechsel notwendig macht, zugeordnet und daraus ein Signal abgeleitet werden, das entweder das Bedienungspersonal informiert oder aber einen automatischen Werkzeugwechsel initiiert. Die Meßvorrichtung besitzt ferner den Vorteil, daß die Messung gegenüber Streulicht anderer Strahlungsquellen, unerwünschte Reflektionen, auch von der Schneidkörperoberfläche, usw. unempfindlich ist. Es können somit Abschirmvorrichtungen entfallen. Die Messung kann direkt am Werkzeug unter normalen Bearbeitungsbedingungen durchgeführt werden. Der Meßvorgang funktioniert auch, wenn die Honleiste oder Schleifscheibe durch Spül- und/oder Kühlmedien benetzt ist.

Ausführungsbeispiele der Erfindung und ihrer vorteilhaften Weiterbildungen werden im folgenden anhand der beigefügten Zeichnungen beschrieben. Es stellen dar:

Figur 1    ein Querschnitt durch ein Ausführrungsbeispiel eines Werkzeuges;

Figur 2    ein Ausführungsbeispiel einer Meßvorrichtung;

Figur 3    die Anordnung der Meßvorrichtung nach Fig. 3 an einem Honwerkzeug;

Figur 4    den Querschnitt durch ein zweites Ausführungsbeispiel eines Werkzeuges;

Figur 5    den Querschnitt eines Stempels zur Herstellung eines Werkzeuges nach Fig. 4;

Figur 6    einen Schritt in der Herstellung eines weiteren Ausführungsbeispiels eines erfindungsgemäßen Werkzeuges;

Figur 7    den Querschnitt durch ein weiteres Ausführungsbeispiel eines Werkzeuges;

Figur 8    eine Draufsicht auf das Werkzeug nach Fig. 7.

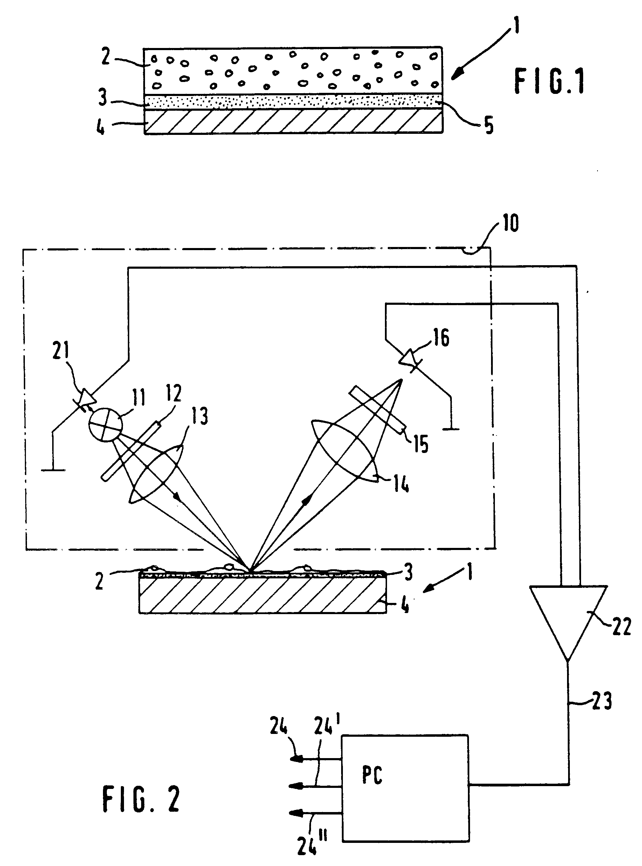

Eine Honleiste 1 (Fig. 1) wird durch einen Schneidbelag 2, eine Haftschicht 3 und eine Stahlsohle 4 gebildet. Die Stahlsohle ist üblicherweise ca. 1-3 mm stark, die Haftschicht üblicherweise 0,1 bis 0,2 mm. Sie besteht aus Bindematerial sowie aus verschiedenen Buntmetallen (z.B. Kupfer, Zink, Zinn). Der Schneidbelag besteht aus Bindematerial mit eingelagertem Diamantkorn, mit einem Durchmesser von 7 - 400 um und einer Konzentration von 1 bis 200 Karat/cm$^3$. Derartige Honleisten werden bei Temperaturen von 700 - 1000° gesintert.

Im Ausführungsbeispiel nach Fig. 1 ist in die Haftschicht 3 ein flureszierender Farbstoff, dargestellt in Form von Pulverteilchen 5 im Verhältnis zwei Teile Bindungspulver zu einem Teil Farbstoff, eingebettet. Fluoreszierende Farbstoffe, die hohe Temperaturen aushalten und nicht giftig sind, sind aus der Kosmetik und der Druckindustrie bekannt. Sie werden mittels sog. Fluorophore gewonnen.

Figur 2 zeigt eine Meßvorrichtung zur Messung des Verschleißes einer Honleiste 1. Ist der Schneidbelag 2 soweit abgenützt. daß die den fluoreszierenden Farbstoff enthaltende Haftschicht 4 zutage tritt, sodann kann dies festgestellt werden:

Zu diesem Zweck ist an der betreffenden Werkzeugmaschine (Honmaschine, Schleifmaschine) eine Meßeinrichtung 10 vorgesehen. Sie weist eine selektiv Strahlung abgebende Sendeanordnung auf, bebildet durch eine Strahlungsquelle 11, Filter 12 und eine Linsenanordnung 13 zur Bündelung der abgegebenen Strahlung auf. Die gebündelte Strahlung trifft auf die Honleiste 1, d.h. - nach Verschleiß des Schneidbelages 2 - auf die den die fluoreszierenden Substanz 5 enthaltende Haftschicht 3. Es ist ferner eine Empfängeranordnung vorgesehen, bestehend aus einer Linsenanordnung 14, Filtern 15 und entsprechenden Fotodioden 16. Die Fotodioden 16 sind ein Detektor, d.h. ein Bauteil, dessen elektrisches Signal durch die auftreffende Strahlung bestimmt wird. Die Senderanordnung und die Empfängeranordnung sind derart, daß die Strahlung, die von der Substanz 5 emittiert wird, wenn sie durch die Senderanordnung angeregt wird, von der Empfängeranordnung aufgenommen wird. In den Figuren ist jeweils nur ein Filter 12 bzw. 15 gezeigt. Dies geschieht der Übersichtlichkeit der Darstellung halber. Um die einzelnen Wellenlängen der spezifischen Spektren zu ermitteln, können jewils abgestimmt mehrere Filter 12 bzw. 15 mit zugeordneten Linsen vorgesehen sein.

Die Filter 12 sind so bestimmt, daß von der Strahlungsquelle 11 eine spezifische Wellenlängenverteilung (Spektrum) verbleibt, welche an die Oberfläche des Werkzeugs 1 gelangt. Diese Strahlung bezeichnet man als Anregungsstrahlung, z.B. mit Wellenlängen von 254 und 366 nm. Sie ruft beim Auftreffen auf die in der Haftschicht 3 in Form von Pulverteilchen 5 inkorporierte flureszierende Substanz eine Emmisionsstrahlung hervor, welche eine andere spezifische Wellenlängenverteilung (Spektrum) aufweist, z.B. mit Wellenlängen von 490, 530, 610 nm.

Die Anregungsstrahlung eines bestimmten Spektrums kann run entweder dadurch erzeugt werden, daß die Strahlungsquelle 11 selbst bereits bereits ein entsprechend selektives Spektrum abgibt (z.B. ein Quecksilber-Niederdruckstrahler). Eine andere Möglichkeit, wie in Fig. 2 dargestellt, besteht darin, daß man zwischen die Strahlungsquelle und die durch die Anregungsstrahlung anzuregende Oberfläche entsprechende Filter 12 einbringt, deren Durchlässigkeit entsprechend selektiv abgestimmt ist. Entsprechend sind die Filter 15 so abgestimmt, daß sie nur Strahlung des entsprechenden Emissionsspektrums durchläßt. Damit ist absolut sichergestellt, daß nur die durch Flueres-zenz des fluoreszierenden Farbstoffes in der Haftschicht 3 hervorgerufene Strahlung an die Fotodiode 16 gelangt und dort zu einem entsprechenden elektrischen Signal führt. Gegenüber irgendwelchen sonsitgen Strahlungen (Streulicht anderer Strahlungsquellen; unerwünschte Reflektionen, usw.) ist einen derartige Anordnung unempfindlich.

Parallel zu der dergestellten Sender/Empfänger-Anordnung ist noch in Gestalt einer Fotodiode 21 ein weiterer Empfänger vorgesehen, der direkt die von der Strahlungsquelle 11 abgestrahlte Strahlung aufnimmt. Die Signale von beiden Fotodiodenanordnungen 16 und 21 gelangen an einen Quotientenbildner 22. Er liefert das Verhältnis beider Signale. Damit wird gewährleistet, daß Schwankungen der Beleuchtungsintensität (z.B. verursacht durch Schwankungen der (nicht gezeigten) Stromversorgung) in das endgültige vom Quotientenbildner 22 abgegebene Signal auf Leitung 23 nicht mit eingehen. Das Signal am Ausgang des Quotientenbildners 22 gelangt an einen Personal Computer PC zur Auswertung und/oder Registrierung. Über weitere Leitungen 24,24'. 24" erfolgen z.B. Signale "Vorwarnung", "frühester Zeitpunkt zum Wechseln", "spätester Zeitpunkt zum Wechseln".

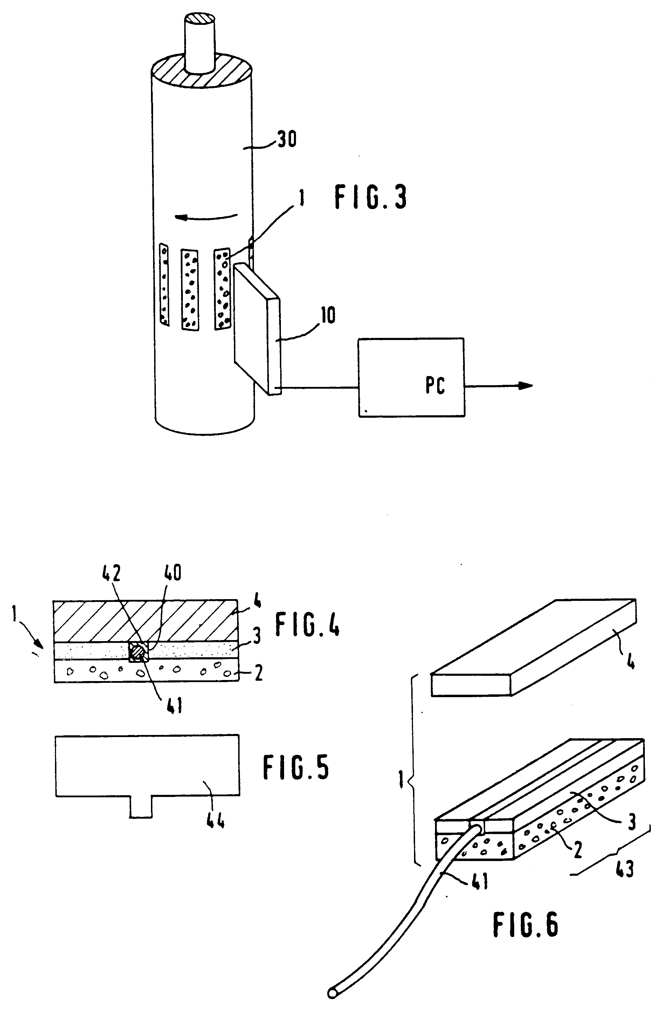

Figur 3 zeigt die Anordnung der Meßeinrichtung 10 in Nähe eines Honwerkzeuges 30, entlang dessen Umfang mehrere Honleisten 1 angeordnet sind.

In Fig. 1 wird der fluoreszierende Farbstoff in Form von Pulverteilchen 5 in die Haftschicht 3 gemischt, die zutage tritt, sobald der Schneidbalg 2 verschlissen ist. Eine andere Ausbildung der Honleiste zeigt Fig. 4. Dort wird - vor Aufbringen der Stahlsohle 4 - die Haftschicht 3 mit einer Nut 40 versehen. Diese ist so tief geschnitten, daß sie gerade in die Oberfläche des Schneidbelages 2 hineinragt oder an sie angrenzt, derart, daß nach Verschleiß des Schneidbelages 2 die Nut von außen her freiliegt. Die Nut selbst hat z.B. einen Querschnitt von 0,3 x 0,3 mm. In diese Nut wird ein Kupferdraht 41 als Indikatorträger eingelegt; er trägt als Indikator eine Beschichtung 42 aus fluoreszierendem Farbstoff. Die Beschichtung kann ca. 0,1 mm dick sein. Zunächst wird (vgl. Fig. 6), ein aus Haftschicht 3 und Schneidbalag 2 bestehender Formteil 43 hergestellt wird, in den dann mit Hilfe eines im Querschnitt in Fig. 5 dargestellten Stempels 44 eine Nut 40 eingeschlagen wird. In diese Nut wird dann der Kupferdraht 41 verlegt. Anschließend die Stahlsohle 4 aufgepresst und die gesamte Honleiste 1 gesintert. Vorteilhaft an dieser Anordnung im Vergleich zu Fig. 1 ist, daß keine Schwächung des Querschittes der Haftschicht erfolgt.

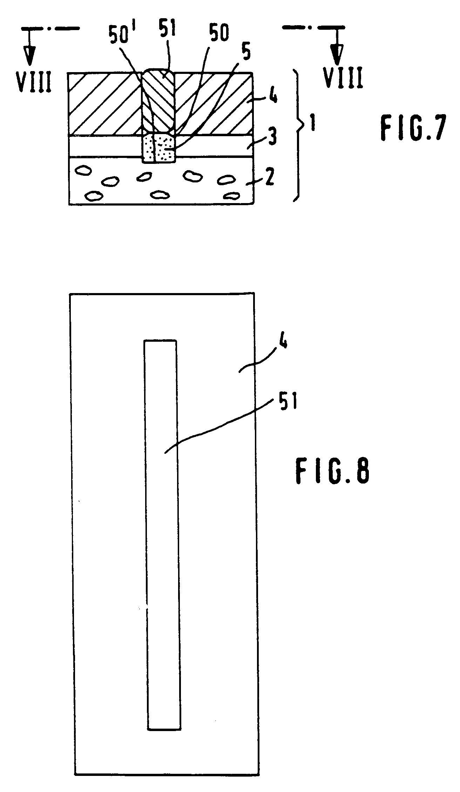

Nach Figur 7 und 8 wird nach dem Fertigstellen der gesamten Honleiste 1 von der Seite der Stahsohle 4 her eine Nut 50 in das Werkzeug eingebracht (z.B. durch Funkenerosion) derart, daß der Fuß der Nut gerade eben in den Schneidbelag 2 hineinragt bzw. mit diesem abschließt und bei Verschleiß des Schneidbelages 2 die Nut 50 von dieser Seite her freigliegt. wird. In die Nut ist dann fluoreszierender Farbstoff 5 eingebracht. Die Nut ist dann mit Lot 51 verschlossen. Vorteilhaft ist dabei, daß der Farbstoff nicht der Temperatur und dem Druck eines Sintervorgangs ausgesetzt werden muß, weil er erst danach eingebracht wird. Anstelle einer Nut kann auch eine Bohrung eingebracht werden. Es muß eben allgemein eine Vertiefung sein, die bis zum Schneidbelag reicht.

Wesentlich ist daß nach Verschleiß des Schneidkörpers eine Substanz zutage tritt, deren Zutagetreten selektiv festgestellt werden kann. Dies kann nicht nur durch die Messung einer selektiv emittierten Strahlung erfolgen, sondern auch durch die Messung selektiver Absorbtion. Generell handelt es sich bei der Meßeinrichtung 10 um eine fotometrische Anordnung unter Einbeziehung der selektiv absorbierenden und/oder emittierenden Substanz, im Werkzeug durch eine Sender/Empfänger-Anordnung. Alternativ zu der dargestellten fluorometrischen Methode ist auch die Feststellung einer Absorbtion von Infrarotstrahlung oder UV-Strahlung möglich. Bei allen Strahlungen ist es besonders günstig, wenn es sich nicht um sichtbares Licht handelt, um Streulicht-oder Fremdlicht-Einflüsse auszuschalten.

Auf allen diesen Wegen ist es möglich, eine einwandfrei funktionierende zur Selbstidentifikation verschlissener Werkzeuge (Honleisten, Schleifscheibe) geeignete Meßvorrichtung zu erhalten.

**Patentansprüche**

1. Honwerkzeug oder Schleifscheibe gebildet durch einen Schneidkörper (2) und einen den Schneidkörper tragenden Schneidkörperträger (4), **dadurch gekennzeichnet,** daß zwischen Schneidkörper (2) und Schneidkörperträger (4) eine elektromagnetische Strahlung bei einer spezifischen Wellenlänge selektiv absorbierende und/oder eine bei Anregung elektromagnetische Strahlung selektiv emittierende Substanz (5) als Schicht, in eine Schicht aus anderem Material (3) eingebettet, oder als Beschichtung (42) eines als diskretes Element unter dem Schneidkörper (2) angeordneten Indikatorträgers (41) angeordnet ist, der in einer Vertiefung (40,50) angeordnet ist, die in einer den Schneidkörper (2) mit dem Schneidkörperträger (4) verbindenden Haftschicht (3) und/oder dem Schneidkörperträger derart an den Schneidkörperträger angrenzend vorgesehen ist, daß die Substanz (5) bei abgenutztem Schneidkörper (2) freiliegt.

2. Honwerkzeug oder Schleifscheibe nach Anspruch 1, dadurch gekennzeichnet, daß der Indikatorträger (41) ein Draht, vorzugsweise aus einem Buntmetall, ist.

3. Honwerkzeug oder Schleifscheibe nach Anspruch 1, dadurch gekennzeichnet, daß die Vertiefung durch eine Nut (50) gebildet wird, die im Schneidkörperträger (4) und der Haftschicht (3) vorgesehen ist und die in den Schneidbelag (2) hineinragt, durch den sie verschlossen wird.

4. Honwerkzeug oder Schleifscheibe nach Anspruch 1 oder einem der folgenden, dadurch gekennzeichnet, daß der Schneidkörper ein Schneidbelag (2) ist, der mittels einer Haftschicht (3) auf einer den Schneidkörperträger bildenden Stahlsohle (4) aufgebracht ist.

5. Honwerkzeug oder Schleifscheibe nach Anspruch 1 oder einem der folgenden, dadurch gekennzeichnet, daß die selektiv emittierende und/oder absorbierende Substanz eine fluoreszierende Substanz (5) ist, die bei Anregung mit einer ersten bestimmten Wellenlängenverteilung eine Strahlung mit einer zweiten bestimmten Wellenlängenverteilung emittiert.

6. Honwerkzeug oder Schleifscheibe nach einem der Ansprüche 1 bis 4, dadurch gekennzeichnet, daß die selektiv absorbierende oder emittierende Substanz eine UV-Strahlung absorbierende Substanz ist.

7. Honwerkzeug oder Schleifscheibe nach einem der Ansprüche 1 bis 4, dadurch gekennzeichnet, daß die selektiv absorbierende oder emittierende Substanz eine infrarote Strahlung selektiv absorbierende Substanz ist.

8. Meßvorrichtung in Verbindung mit einem Honwerkzeug oder einer Schleifscheibe nach Anspruch 1 oder einem der folgenden, dadurch gekennzeichnet, daß eine selektiv Lichtstrahlung abgebende Sendeanordnung (11,12,13) auf den Schneidkörper (2) ausgerichtet angeordnet ist, und daß ferner eine selektive Strahlung aufnehmende Empfängeranordnung (14,15,16) derart auf das Honwerkzeug (1) ausgerichtet angeordnet ist, daß sie die von der Sendeanordnung auf das Werkzeug (1) abgestrahlte und vom Werkzeug reflektierte Strahlung aufnimmt und aus dieser ein Anzeigesignal (S1,S2,S3) ableitet.

9. Meßeinrichtung nach Anspruch 8, dadurch gekennzeichnet, daß das elektrische Signal an einen Differenzverstärker (22) gelangt, und daß ein von der Senderanordnung (11) unmittelbar mittels eines weiteren Empfängers (21) abgeleitetes Signal ebenfalls an den Differenzverstärker (22) gelangt, und daß das Ausgangssignal des Differenzverstärkers der Auswertung in einer Auswerteeinheit (PC) zugrunde gelegt wird.

**Claims**

1. A honing tool or grinding wheel formed by a cutting body (2) and a cutting body carrier (4) which carries the cutting body characterised in that disposed between the cutting body (2) and the cutting body carrier (4) is a substance (5) which selectively absorbs electromagnetic radiation at a specific wavelength and/or selectively emits electromagnetic radiation when stimulated, in the form of a layer, embedded into a layer of other material (3), or in the form of a coating (42) on an indicator carrier (41) which is arranged in the form of a discrete element under the cutting body (2) and which is arranged in a recess (40, 50) which is provided in a bonding layer (3) joining the cutting body (2) to the cutting body carrier (3) and/or the cutting body carrier, adjoining the cutting body carrier, in such a way that the substance (5) is exposed when the cutting body (2) is worn away.

2. A honing tool or grinding wheel according to claim 1 characterised in that the indicator carrier (41) is a wire, preferably comprising a non-ferrous metal.

3. A honing tool or grinding wheel according to claim 1 characterised in that the recess is formed by a groove (50) which is provided in the cutting body carrier (4) and the bonding layer (3) and which projects into the cutting coating (2) by which it is closed.

4. A honing tool or grinding wheel according to claim 1 or one of the following claims characterised in that the cutting body is a cutting coating (2) which is applied by means of a bonding layer (3) to a steel base (4) forming the cutting body carrier.

5. A honing tool or grinding wheel according to claim 1 or one of the following claims characterised in that the selectively emitting and/or absorbing substance is a fluorescent substance (5) which upon stimulation with a first given wavelength distribution emits a radiation with a second given wavelength distribution.

6. A honing tool or grinding wheel according to one of claims 1 to 4 characterised in that the selectively absorbing or emitting substance is a UV-radiation-absorbing substance.

7. A honing tool or grinding wheel according to one of claims 1 to 4 characterised in that the selectively absorbing or emitting substance is a substance which selectively absorbs infra-red radiation.

8. A measuring device in conjunction with a honing tool or a grinding wheel according to claim 1 or one of the following claims characterised in that a transmitting arrangement (11, 12, 13) which selectively outputs light radiation is arranged to be directed on to the cutting body (2) and that in addition a receiver arrangement (14, 15, 16) which selectively receives radiation is arranged to be directed on to the honing tool (1) in such a way that it receives the radiation which is radiated from the transmitting arrangement on to the tool (1) and which is reflected by the tool and derives from said radiation a display signal (S1, S2, S3).

9. A measuring device according to claim 8 characterised in that the electrical signal is applied to a differential amplifier (22) and that a signal which is derived directly from the transmitter arrangement (11) by means of a further receiver (21) is also applied to the differential amplifier (22) and that the output signal of the differential amplifier is the basis for evaluation in an evaluation unit (PC).

**Revendications**

1. Rodoir ou meule constitué d'un corps de coupe (2) et d'un support (4) supportant ledit corps de coupe, caractérisé par le fait qu'entre le corps de coupe (2) et son support (4) une substance absorbant sélectivement un rayonnement électro-magnétique à une longueur d'onde spécifique et/ou émettant sélectivement en cas d'excitation un rayonnement électromagnétique, est noyée, sous forme de couche, dans une autre couche en une autre matière (3) ou bien est disposée sous la forme d'un revêtement (42) d'un support d'indicateur (41) disposé en élément discret sous le corps de coupe (2), le porte-indicateur (41) étant disposé dans une encoche (40, 50) laquelle est prévue à l'intérieur d'une couche adhésive (3) reliant le support (4) au corps de coupe (2) et/ou à l'intérieur dudit support du corps de coupe, le voisinage entre le support (4) et l'encoche (40, 50) étant tel que la substance (5) ce trouve dégagée lorsque le corps de coupe (2) est usé.

2. Rodoir ou meule selon la revendication 1, caractérisé par le fait que le support d'indicateur (41) est un fil métallique de préférence en métal non ferreux.

3. Rodoir ou meule selon la revendication 1, caractérisé par le fait que l'encoche est formée par une rainure (50) qui est prévue dans le support (4) du corps de coupe et dans la couche adhésive (3), et qui pénètre dans le corps de coupe (2) par lequel elle est fermée.

4. Rodoir ou meule selon la revendication 1 ou l'une des revendications suivantes, caractérisé par le fait que le corps de coupe est une garniture (2) qui est appliquée au moyen d'une couche adhésive (3) sur une semelle d'acier (4) formant le support.

5. Rodoir ou meule selon la revendication 1 ou l'une des revendications suivantes, caractérisé par le fait que la substance émettrice et/ou absorbante sélectivement est une substance fluorescente (5), laquelle émet, à une première distribution déterminée de longueurs d'ondes, un rayonnement d'une deuxième distribution déterminée de longueur d'onde.

6. Rodoir ou meule selon l'une des revendications 1 à 4, caractérisé par le fait que la substance absorbante ou émettrice sélectivement est une substance absorbant le rayonnement UV.

7. Rodoir ou meule selon l'une des revendications 1 à 4, caractérisé par le lait que la substance absorbante ou émettrice sélectivement est une substance absorbant sélectivement un rayonnement infrarouge.

8. Dispositif de mesure associé à un rodoir ou à une meule salon la revendication 1 ou l'une des revendications suivantes, caractérisé par le fait qu'un montage émetteur (11, 12, 13) émettant un rayonnement lumineux sélectivement, est orienté en direction du corps de coupe (2) et qu'en outre un montage récepteur (14, 15, 18) recevant un rayonnement sélectif est orienté sur le rodoir (1) de telle manière que ce montage reçoit le rayonnement émis par l'arrangement émetteur sur l'outil (1) et réfléchi par cet outil, et en dérive un signal indicateur (S1, S2, S3).

9. Dispositif de mesure selon la revendication 8, caractérisé par le fait que le signal électrique parvient à un amplificateur différentiel (22) et qu'un signal dérivé par le montage émetteur (11) au moyen d'un autre récepteur (21) parvient également à l'amplificateur différentiel (22) et que le signal de sortie de l'amplificateur est pris comme base de l'analyse dans un ordinateur (PC).

FIG.1

FIG. 2

FIG.3

FIG.4

FIG.5

FIG.6

FIG.7

FIG.8